# EUROPEAN PATENT APPLICATION

(11) **EP 1 118 721 A1**
(43) Date of publication of application: **25.07.2001**
(21) Application number: 00204383.4
(22) Date of filing: 07.12.2000
(51) Int. Cl.: E02F 9/08

(54) **Hood for earthmoving machines**

(30) Priority: 17.12.1999 IT BO990693
(71) Applicant: NEW HOLLAND ITALIA S.p.A., I-41100 Modena (IT)
(72) Inventor: Burgo, Giuseppe, 40026 Imola (BO) (IT)
(74) Representative: Vandenbroucke, Alberic

(57) **Abstract**

A hood (1) for earthmoving machines (2), the hood having a top panel (15), and two side panels (16) extending beneath and on opposite sides of the top panel (15) to form a substantially upside down U-shaped shell resting on a frame (4) of the vehicle to close the engine compartment (6) of the vehicle (2); the hood (1) being characterized in that the side panels (16) extend substantially parallel to a vertical centerline plane (P) of the vehicle and are hinged to the frame (4) of the vehicle to rotate, about an axis of rotation (C) substantially perpendicular to the vertical centerline plane (P) of the vehicle, between an open position in which the side panel (16) is located over the top panel (15) to permit access to the engine compartment (6), and a closed position in which the side panel (16) is located beneath the top panel (15) to close the engine compartment (6).

## Description

The present invention relates to a hood for earthmoving machines, such as tractor loader backhoes (TLB's).

In particular, the present invention relates to a hood for the engine compartment of earthmoving machines comprising a front bucket arm hinged to the vehicle frame to move parallel to the vertical centerline plane of the vehicle. Normally, a bucket or shovel is hingeably attached to the free end of the bucket arm to rotate about an axis of rotation perpendicular to the vertical centerline plane of the vehicle.

The bucket arm is normally fixed to the vehicle frame between the cab and the engine compartment, and is defined by two half-arms hinged to the vehicle on opposite sides of the vehicle frame so that each is movable in a plane parallel to the vertical centerline plane of the vehicle. The bucket arm further comprises a transverse stiffening member connecting the two half-arms rigidly to each other.

Since the engine compartment is encompassed inbetween the path of the two half-arms of the bucket arm, the engine compartment hood currently comprises on the one hand a top panel fixed permanently to the vehicle frame over the engine inside the compartment, and on the other hand two side panels fixed to the vehicle frame on opposite sides of the engine so as to close the engine compartment by means of an upside down U-shaped shell. In as much as access to the inside of the engine compartment must be ascertained, the side panels should not be fixed to the frame in a permanent manner. However, considering that conventional side panels, hinging around a horizontal axis, extending longitudinally of the machine, would interfere with the path of movement of the bucket arm, resort is normally taken in side panels which can be taken off the frame completely when access to the engine compartment is required.

Hoods of the above type have the major drawback of not being very practical, on account of the size and weight of the side panels making them difficult to handle.

Moreover, when removed for access to the engine compartment, the side panels are very often set aside carelessly and, when the maintenance work on the engine is completed, are often crushed by the vehicle leaving the service area because the operator has forgotten to fit them back onto the frame.

It is an object of the present invention to provide a hood for earthmoving machines, which is more practical than currently known types.

According to the present invention, there is provided a hood for an earthmoving machine, the hood comprising a top panel, and two side panels extending beneath and on opposite sides of the top panel to form a substantially inverted U-shaped shell resting on a frame of the vehicle to close a generic compartment of said vehicle; said side panels extending substantially parallel to a vertical centerline plane of the vehicle.

The hood is characterized in that at least one of said side panels is hinged to the frame of the vehicle to rotate about an axis of rotation substantially perpendicular to said vertical centerline plane between an open position in which the side panel is located above said top panel to permit access to said compartment, and a closed position in which the side panel is located beneath said top panel to close the compartment.

A non-limiting embodiment of the present invention will now be described, by way of example, with reference to the accompanying drawings, in which:
Figure 1 shows a side view of an earthmoving machine featuring an engine compartment hood in accordance with the teachings of the present invention; and
Figure 2 shows a larger-scale view in perspective, with parts removed for clarity, of the front of the Figure 1 vehicle showing the engine compartment hood in detail.

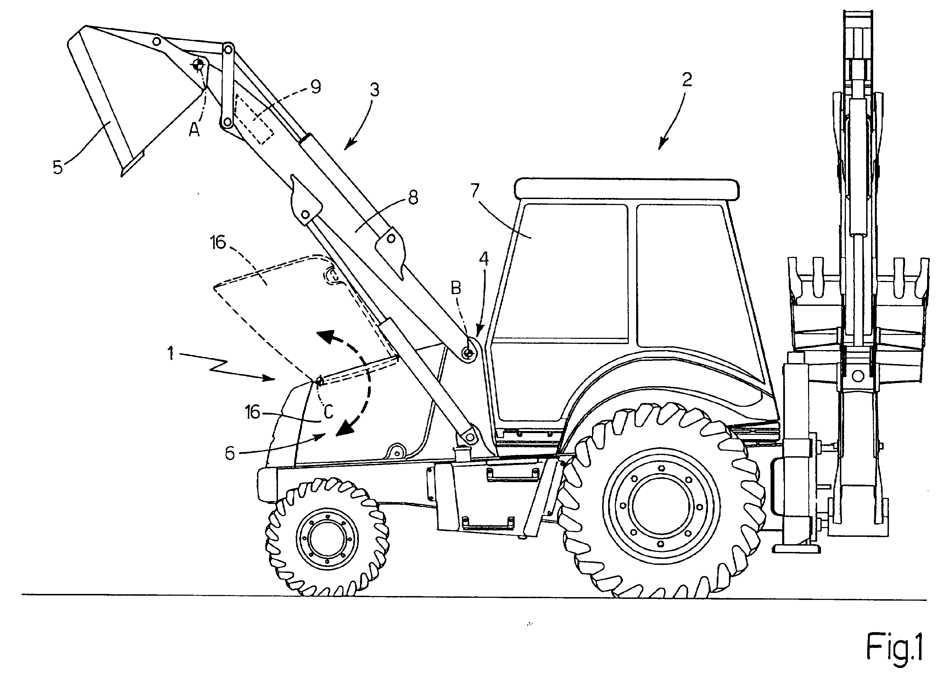

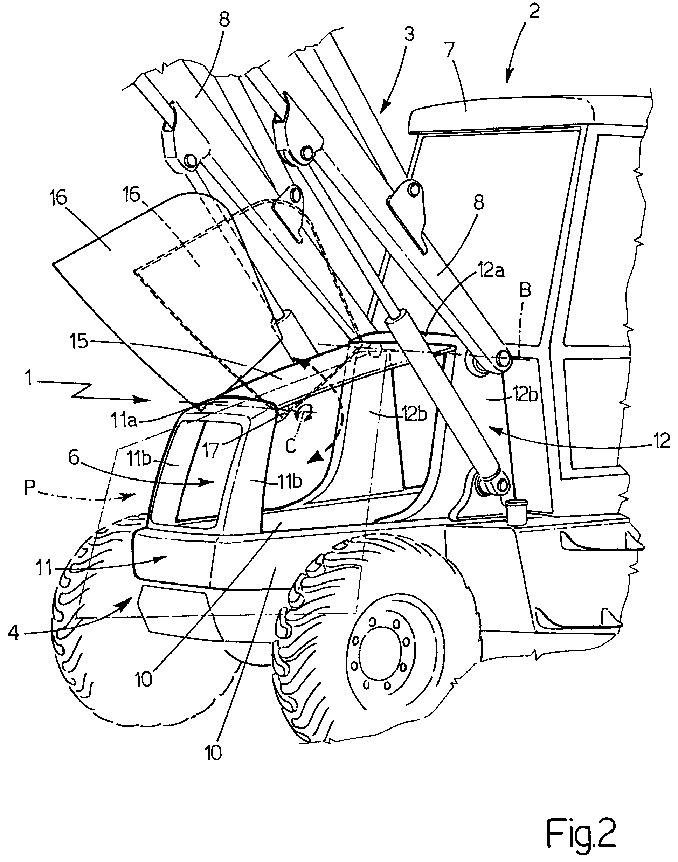

Reference number 1 in Figures 1 and 2 indicates as a whole an engine compartment hood particularly suitable for use on an earthmoving machine 2 comprising a front bucket arm 3 hingeably attached to the frame 4 of the vehicle to move parallel to a vertical centerline plane P (indicated schematically in Figure 2) of the vehicle. A bucket or shovel 5 is hinged to the end of bucket arm 3 to rotate about an axis of rotation A perpendicular to the vertical centerline plane P of the vehicle.

More specifically, earthmoving machine 2 comprises an engine compartment 6 and a cab 7 defining the front and central portions of the vehicle respectively. Bucket arm 3 is hinged to the vehicle frame 4 between engine compartment 6 and cab 7 so as to rotate about an axis of rotation B perpendicular to the centerline plane P of the vehicle.

In the example shown, bucket arm 3 is defined on the one hand by two half-arms 8 hinged to vehicle frame 4 on opposite sides of the vehicle - between engine compartment 6 and cab 7 - so that each lies and is movable in a plane parallel to the vertical centerline plane P of the vehicle, and on the other hand by a stiffening bar 9 connecting the two half-arms 8 rigidly to each other.

With reference to Figure 2, in the example shown, frame 4 comprises two longitudinal members 10 extending horizontally on opposite sides of plane P and along the full length of the vehicle. A number of stiffening ribs connect the two longitudinal members 10 to each other. More specifically, frame 4 comprises a front rib 11 to which the front of the vehicle is attached and a central rib 12 to which bucket arm 3 is connected directly.

Ribs 11 and 12 laterally define engine compartment 6 and are preferably, though not necessarily, gantryshaped, i.e. in the form of an inverted U.

With reference to Figures 1 and 2, engine compartment hood 1 comprises a top panel 15, and two side panels 16, which, in the closed position, extend beneath and on opposite sides of top panel 15 to form a substantially inverted U-shaped shell resting on vehicle frame 4 to close engine compartment 6.

More specifically, top panel 15 extends between the horizontal cross members 11a and 12a of ribs 11 and 12 to close the top of engine compartment 6. The two side panels 16 on the other hand extend on opposite sides of top panel 15, between the vertical posts 11b and 12b of ribs 11 and 12, to close engine compartment 6 laterally.

Whereas top panel 15 is oriented perpendicularly to the vertical centerline plane P of the vehicle, and is fixed permanently to vehicle frame 4, each side panel 16, on the other hand, projects in a direction parallel, or nearly parallel, to the plane P, and is hingeably attached to vehicle frame 4. The hingeable connection allows the side panel 16 to rotate about an axis of rotation C perpendicular to the vertical centerline plane P, between a closed position (Figure 1) in which side panel 16 is positioned between the vertical posts 11b and 12b of ribs 11 and 12 to close engine compartment 6, and an open position (Figure 2) in which side panel 16 is located above top panel 15 to permit access to engine compartment 6.

More specifically, in the example shown, each side panel 16 is substantially trapezoidal and hinged to frame 4 at a vertex or pivot 17 close to the joint between horizontal cross member 11a and vertical post 11b of front rib 11, so as to permit access to engine compartment 6 by rotating side panel 16 upwards and towards the bucket 5. The axes of rotation C of the two side panels 16 are obviously coincident. As the vertical posts llb and the cross member lla are an integral part of the frame beams 10, a solid basis is formed for attaching the pivots 17 thereto. This ensures the rigidity of the structure when a side panel 16 is standing in the open position, solely supported by its associated pivot 17. Abutment stops are provided either on the posts 11b or inside the pivot 17 to limit the extent to which a side panel 16 may be opened.

The operation of the engine compartment hood 1 easily can be deduced from the foregoing description. The advantages of the hood according to the present invention are clear. Firstly, the problem of where to dispose side panels 16 when access is required to engine compartment 6 no longer exists, since the panels remain fixed to the vehicle frame 4. Secondly, when in the open position, the side panels 16 are clearly visible from the cab 7, thus ruling out any risk of the vehicle being operated with the side panels 16 still in the open position. And thirdly, the panels 16 easily can be opened in whatever position of the bucket arm 3 in as much as the panels 16 and the bucket arm 3 move in parallel planes, thereby preventing any interference.

Clearly, changes may be made to engine compartment hood 1 as described and illustrated herein without, however, departing from the scope of the present invention.

## Claims

1. A hood (1) for an earthmoving machine (2), the hood comprising a top panel (15), and two side panels (16) extending beneath and on opposite sides of the top panel (15) to form a substantially inverted U-shaped shell resting on a frame (4) of the vehicle to close a generic compartment (6) of said vehicle (2); said side panels (16) extending substantially parallel to a vertical centerline plane (P) of the vehicle; and
characterized in that at least one of said side panels (16) is hinged to the frame (4) of the vehicle to rotate about an axis of rotation (C) substantially perpendicular to said vertical centerline plane (P) between an open position in which the side panel (16) is located above said top panel (15) to permit access to said compartment (6), and a closed position in which the side panel (16) is located beneath said top panel (15) to close the compartment (6).

2. A hood according to claim 1, characterized in that the top panel (15) is perpendicular to said vertical centerline plane (P) of the vehicle.

3. A hood according to claims 1 or 2, characterized in that said at least one side panel (16) is substantially trapezoidal, and is hinged by a single vertex (17) to the frame (4) of the vehicle.

4. A hood according to any of the preceding claims, characterized in that said earthmoving machine (2) has a front bucket arm (3) hinged to the frame (4) of the vehicle to move parallel to said vertical centerline plane (P); and a bucket (5) hinged to the end of the bucket arm (3) to rotate about an axis of rotation (A) perpendicular to said vertical centerline plane (P) of the vehicle.

5. A hood according to claim 4, characterized in that the compartment (6) encloses an engine of the earthmoving machine (2).

6. A hood according to claims 4 or 5, characterized in that the front bucket arm (3), when in use, and the said at least one side panel (16), when rotated from the open to the closed position and vice versa, move in substantially parallel planes.

7. A hood according to claim 3 and any claim appended thereto, characterized in that the frame (4) of the vehicle comprises longitudinal beams (10), a connecting rib (11) and an upstanding reinforcement (11a, 11b) of inverted U-shape; the vertex (17) being attached to a top portion of the upstanding reinforcement (11a, 11b).
